# EUROPEAN PATENT APPLICATION

(11) **EP 3 564 412 A1**
(43) Date of publication of application: **06.11.2019**
(21) Application number: 17888755.0
(22) Date of filing: 26.12.2017
(51) Int. Cl.: C25D 5/42, C25D 5/12, C25D 5/44, C25D 7/00, H01R 13/03, H01R 43/16

(54) **SURFACE TREATMENT MATERIAL AND ARTICLE FABRICATED USING SAME**

(30) Priority: 27.12.2016 JP 2016253917
(71) Applicant: Furukawa Electric Co., Ltd., Chiyoda-ku Tokyo 100-8322 (JP)
(72) Inventor: KOBAYASHI Yoshiaki, Tokyo 100-8322 (JP); YAMAUCHI Miho, Tokyo 100-8322 (JP)
(74) Representative: Weickmann & Weickmann PartmbB
(86) International application number: PCT/JP2017/046748
(87) International publication number: WO 2018/124114

(57) **Abstract**

The present invention provides: a surface-treated material that can simply and in a short time period form a surface treatment film having an adequate adhesiveness particularly on an electroconductive substrate which is mainly formed of a base metal having a large ionization tendency and is considered to resist having a sound plating film formed thereon; and a component produced by using the same.

A surface-treated material (10) of the present invention comprises an electroconductive substrate (1) and a surface treatment film (2) formed of at least one or more layers of metal layers (3 and 4) which are formed on the electroconductive substrate (1), and among the at least one or more layers of metal layers (3 and 4), a lowermost metal layer (3) which is directly formed on the electroconductive substrate (1) comprises a plurality of metal-buried portions (3a) that are scattered in the electroconductive substrate (1) and continuously extend from a surface of the electroconductive substrate (1) toward an inside thereof.

## Description

### Technical Field

The present invention relates to a surface-treated material and a component produced by using the same, and particularly relates to a technology that simply forms a surface treatment film that is formed of at least one layer of a metal layer so that the surface treatment film has an adequate adhesiveness, on an electroconductive substrate which is mainly formed of a base metal having a large ionization tendency and is considered to resist having a sound plating film formed thereon.

### Background Art

For a material to be plated (electroconductive substrate) which is used for forming a conventional electrical contact and the like, metal materials such as copper, copper alloys, iron and iron alloys have been widely used, from the viewpoint of being inexpensive and having comparatively excellent characteristics. Because such metal materials are satisfactory particularly in electroconductivity and workability, are easily available, in addition, can easily have coating treatment applied on their surface, and have a surface excellent in plating adhesiveness, the metal materials are still used as mainstream materials for the electroconductive substrate.

However, copper (specific gravity of 8.96) and iron (specific gravity of 7.87) are materials each having a relatively high specific gravity, and accordingly, for instance, in a wire harness for automobiles and a bodywork of an aircraft, materials such as aluminum (specific gravity of 2.70) and magnesium (specific gravity of 1.74) each having a comparatively small specific gravity have been increasingly used in place of the copper and the iron.

By the way, it is considered that a method of plating the surface of the aluminum is complicated which is referred to as a light metal among metals, and besides that it is difficult for aluminum to have a plating film with adequate adhesiveness formed thereon. Examples of factors for this include the following: aluminum is apt to form an oxide film called a passivation film formed on its surface, this oxide film exists in a stable state, and it is difficult for a base metal such as aluminum to be plated in a wet process.

In order to inhibit the formation of an oxide film on the surface of the aluminum-based base material, conventionally, measures have been taken to coat the surface of the base material with a metal such as tin, and keep the contact resistance or inhibit the increase thereof (for instance, Patent Literature 1 and the like).

In addition, in the case where an underlying layer such as a nickel layer which is formed for the purpose of improving plating adhesiveness and a coating layer which is formed of a metal (tin, silver and the like) for electric contact are sequentially formed on the surface of an aluminum-based base material, for instance, by a wet plating method, even if the underlying layer is formed on the surface of the base material and then the coating layer is formed on the underlying layer, sufficient adhesiveness cannot be usually obtained due to an oxide film present on the surface of the base material.

Because of this, conventionally, it has been general to conduct a pretreatment for enhancing an adhesive strength between the base material and the plating film (underlying layer and coating layer), by conducting zinc substitution treatment which is referred to as zincate treatment, with the use of a solution containing zinc, before forming the underlying layer and the coating layer (for instance, Patent Literatures 2, 3 and the like), or to conduct a pretreatment for forming fine etched recesses on the surface of the base material by etching with an active acid treatment liquid, and enhance an adhesive strength by an anchor effect due to the formed fine etching recesses (for instance, Patent Literature 4 and the like).

Generally, in a plating film which has been formed after the zincate treatment has been performed on the surface of the aluminum base material, the zinc layer which has been formed to have a thickness of, for instance, approximately 100 nm is interposed between the base material and the plating film, and the plating layer (plating film) is formed on this zinc layer; and accordingly when the plating layer is heated, zinc in the zinc layer is diffused in the plating layer and is further diffused up to and appears on the surface layer of the plating layer. As a result, the plating layer results in causing various problems: for example, a contact resistance results in increasing, wire bonding properties are lowered and solder wettability is lowered. In motors of trains and electric locomotives, in particular, it has been studied to change metal of wires to aluminum so as to reduce the weight, but the wire reaches 160°C depending on the portion, and accordingly it is necessary to improve the heat resistance of a plating film which has been formed on the surface of the conductor. A large-sized bus bar and the like show a great effect of reduction in weight due to the change to aluminum. These are produced by welding several components, but the temperature in the vicinity of the welded portion becomes high, and accordingly a plating film having higher heat resistance is required. In addition, in recent years, torrential rainfall has increased, and when a body has been struck by lightning, a large current instantaneously flows in the body, and heat which is generated by Joule heat at the time is said to be 180°C or higher. Heat resistance is necessary for a conductor which is used in a power distribution board and the like. Furthermore, aluminum has been progressively used for a wire harness of automobiles, and a heat resistance of 150°C is required in the periphery of the engine and the periphery of a high power motor. From such a background in recent years, the plating is required which does not cause deterioration in adhesiveness and an increase in contact resistance, even when the plating film has been held at 200°C for 24 hours in an accelerated test. In addition, in some state of the zinc layer formed in the zincate treatment, there have been cases where plating defects often occur such as the formation of bumps in the subsequent plating and precipitation abnormality.

Furthermore, in a drone and a wearable device, there is a possibility that rain and sweat get inside the device, and high corrosion resistance is required also in order that long-term reliability is ensured. Motors and inverters of an electric transformer in a salt water environment such as wind-power generation are also similar. However, if the plating layer (underlying layer) which is formed after the zinc substitution treatment is thinly formed, it is difficult to completely coat the zinc-containing layer due to the formation of a nonuniform plating layer and the formation of pinholes, and there is the following problem: erosion preferentially proceeds along the zinc-containing layer in the salt water environment and as a result, peeling occurs between the underlying layer and the base material. Because of this, also in order to control the plating film so that the above described problem does not occur, it is desirable that the zinc layer does not exist between the substrate and the plating film, and when it is necessary to form the zinc layer, a zinc layer having a thickness as thin as possible is formed.

In addition, in the method of forming fine unevenness on the surface as in Patent Literature 4, there is the following problem: several minutes are necessary for the treatment time period and the productivity is low.

### Document List

### Patent Literatures

Patent Literature 1: Japanese Patent Application Publication No. 2014-63662
Patent Literature 2: Japanese Patent Application Publication No. 2014-47360
Patent Literature 3: Japanese Patent Application Publication No. 2012-087411
Patent Literature 4: Japanese Patent Application Publication No. 2002-115086

### Summary of Invention

### Technical Problem

An object of the present invention is to provide: a surface-treated material that can simply form a surface treatment film so that the surface treatment film has an adequate adhesiveness particularly on an electroconductive substrate which is mainly formed of a base metal having a large ionization tendency and is considered to resist having a sound plating film formed thereon, in a short time period; and a component produced by using the same.

### Solution to Problem

The present inventors have made an extensive investigation of the above described problem, and as a result, have found that a surface-treated material having adequate adhesiveness can be provided by paying attention to the lowermost metal layer which is a metal layer directly formed on the electroconductive substrate, out of at least one or more layers of metal layers forming a surface treatment film formed on the electroconductive substrate, and optimizing a shape of a portion at which the lowermost metal layer adheres to (contacts) the electroconductive substrate; and have reached the present invention.

Specifically, the summary and the constitution of the present invention are as follows.
(1) A surface-treated material comprising an electroconductive substrate and a surface treatment film formed of at least one or more layers of metal layers which are formed on the electroconductive substrate, wherein among the at least one or more layers of metal layers, a lowermost metal layer which is a metal layer directly formed on the electroconductive substrate comprises a plurality of metal-buried portions that are scattered in the electroconductive substrate and continuously extend from a surface of the electroconductive substrate toward an inside thereof.
(2) A surface-treated material comprising an electroconductive substrate and a surface treatment film formed of one or more layers of metal layers on the electroconductive substrate, wherein among the metal layers forming the surface treatment film, a lowermost metal layer in contact with the electroconductive substrate comprises a plurality of metal-buried portions that extend from a surface of the electroconductive substrate toward an inside in a thickness direction thereof.
(3) The surface-treated material according to the above described (1) or (2), wherein an average value of extension lengths of the metal-buried portions is in a range of 0.5 µm or more and 10 µm or less, as measured along a thickness direction from the surface of the electroconductive substrate, as a vertical cross section of the surface-treated material is viewed.
(4) The surface-treated material according to any one of the above described (1) to (3), wherein an average existence density of the metal-buried portions is in a range of 1 piece or more and 10 pieces or less per cross-sectional width of the electroconductive substrate of 50 µm, as a vertical cross section of the surface-treated material is viewed.
(5) The surface-treated material according to any one of the above described (1) to (4), wherein the electroconductive substrate is aluminum or an aluminum alloy.
(6) The surface-treated material according to any one of the above described (1) to (5), wherein the lowermost metal layer is nickel, a nickel alloy, cobalt, a cobalt alloy, copper or a copper alloy.
(7) The surface-treated material according to any one of the above described (1) to (6), wherein the surface treatment film is formed of the lowermost metal layer and one or more layers of metal layers formed on the lowermost metal layer, and the one or more layers of metal layers are formed of any metal selected from the group consisting of nickel, a nickel alloy, cobalt, a cobalt alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy.
(8) The surface-treated material according to the above described (7), wherein the one or more layers of metal layers are composed of two or more layers of metal layers.
(9) A terminal produced with use of the surface-treated material according to any one of the above described (1) to (8).
(10) A connector produced with use of the surface-treated material according to any one of the above described (1) to (8).
(11) A bus bar produced with use of the surface-treated material according to any one of the above described (1) to (8).
(12) A lead frame produced with use of the surface-treated material according to any one of the above described (1) to (8).
(13) A medical member produced with use of the surface-treated material according to any one of the above described (1) to (8).
(14) A shield case produced with use of the surface-treated material according to any one of the above described (1) to (8).
(15) A coil produced with use of the surface-treated material according to any one of the above described (1) to (8).
(16) A contact switch produced with use of the surface-treated material according to any one of the above described (1) to (8).
(17) A cable produced with use of the surface-treated material according to any one of the above described (1) to (8).
(18) A heat pipe produced with use of the surface-treated material according to any one of the above described (1) to (8).

According to the present invention, it becomes possible to provide a surface-treated material that comprises an electroconductive substrate, in particular, an electroconductive substrate which is, for instance, aluminum or an aluminum alloy which is mainly formed of a base metal having a large ionization tendency and is considered to resist having a sound plating film formed thereon, and a surface treatment film that is formed of at least one or more layers of metal layers which are formed on the electroconductive substrate, wherein among the at least one or more layers of metal layers, the lowermost metal layer which is a metal layer directly formed on the electroconductive substrate includes a plurality of metal-buried portions that are scattered in the electroconductive substrate and continuously extend from the surface of the electroconductive substrate toward the inside thereof. Accordingly, the process is simplified, as compared to a conventional surface-treated material in which a zinc-containing layer (in particular, zincate treatment layer) having a thickness, for instance, of approximately 100 nm is interposed between the substrate and the plating film. As a result, it becomes possible to provide the surface-treated material that can be safely produced at an inexpensive cost, in addition, exhibits excellent adhesiveness as a result of the metal-buried portions of the lowermost metal layer infiltrating into the inside of the electroconductive substrate to thereby a mechanical anchoring effect is provided, and can further greatly shorten its production time period as well. As a result, the surface-treated material can keep the original characteristics which are obtained after the surface treatment film has been formed without deteriorating them in use environment, for instance, at high temperature (for instance, approximately 200°C); and it has become possible to provide a surface-treated material having high long-term reliability, and various components (products) which are produced by using the same, such as, for instance, terminals, connectors, bus bars, lead frames, medical members, shield cases, coils, accessories, contact switches, cables, heat pipes and memory disks.

### Brief Description of Drawings

[Fig. 1] Fig. 1 is a schematic sectional view of a surface-treated material which is a first embodiment according to the present invention.
[Fig. 2] Fig. 2 is a view for describing extension lengths and existence density of metal-buried portions that have been formed in a surface-treated material which is a first embodiment.
[Fig. 3] Fig. 3 is a schematic sectional view of a surface-treated material which is a second embodiment.
[Fig. 4] Fig. 4 is a SIM photograph at the time when a cross section of a representative surface-treated material according to the present invention has been observed.

### Description of Embodiments

Thereafter, embodiments according to the present invention will be described below with reference to the drawings.

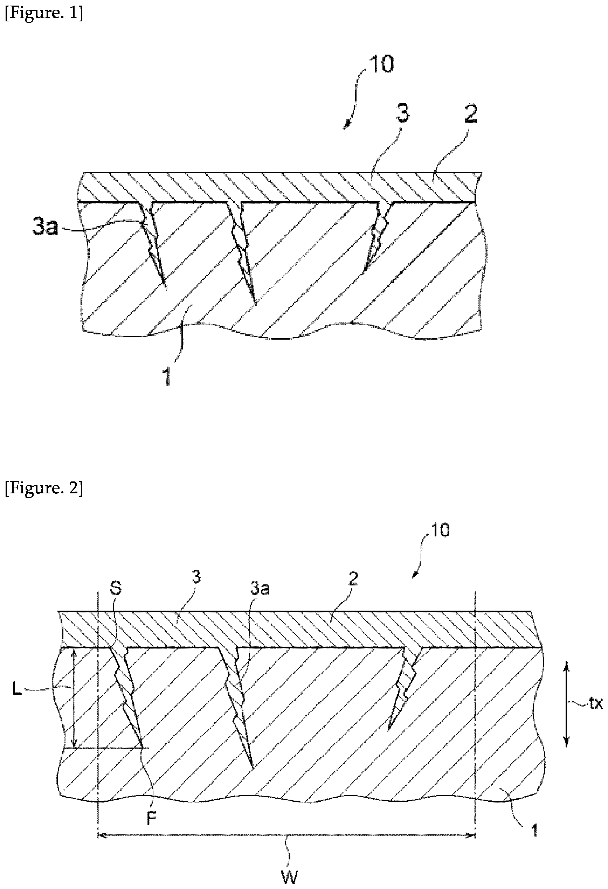

Fig. 1 shows a schematic cross-sectional view of a surface-treated material of a first embodiment.

The shown surface-treated material 10 includes an electroconductive substrate 1 and a surface treatment film 2.

### (Electroconductive substrate)

The electroconductive substrate 1 is not limited in particular, but is preferably, mainly formed of a base metal having a large ionization tendency, and among them, for instance, is aluminum (Al) or an aluminum alloy which resists having a sound plating film formed thereon with the use of a wet plating method, in a point that the electroconductive substrate can remarkably exhibit an effect of the present invention. Furthermore, in the drawing, the shape of the electroconductive substrate 1 is illustrated by an example of a strip, but may be a form of a plate, a wire, a rod, a pipe, a foil or the like, and various shapes can be adopted according to the application.

### (Surface treatment film)

The surface treatment film 2 is formed of at least one or more layers of metal layers, and in Fig. 1, is formed of one metal layer 3; and is formed on the electroconductive substrate 1. Here, there are cases in which the surface treatment film 2 is formed of one layer of metal layer and two or more layers of metal layers; and accordingly in any case where the surface treatment film 2 is formed of one layer of metal layer and two or more layers of metal layers, in the present invention, the (one layer of) metal layer 3 which is directly formed on the electroconductive substrate 1 shall be referred to as "lowermost metal layer". Moreover, the surface-treated material 10 shown in Fig. 1 is formed of only one layer of the metal layer which is formed directly on the electroconductive substrate 1, and accordingly this metal layer 3 is the lowermost metal layer.

It is preferable that the lowermost metal layer 3 not be a zinc-containing layer formed by zincate treatment but be a metal layer composed of, for instance, nickel (Ni), a nickel alloy, cobalt (Co), a cobalt alloy, copper (Cu) or a copper alloy. A preferable thickness of the lowermost metal layer 3 is preferably 0.05 µm or more and 2.0 µm or less, more preferably is 0.1 µm or more and 1.5 µm or less, and further preferably is 0.2 µm or more and 1.0 µm or less, in consideration of the solder wettability, the contact resistance and the bending workability at the time after an environmental test at high temperature (for instance, 200°C). Moreover, when the lowermost metal layer is Ni, adequate heat resistance is obtained, and in the case of Cu, adequate moldability is obtained. In addition, when Ni or Co is used for the lowermost metal layer, there is an effect of alleviating the electrolytic corrosion of the aluminum substrate when a function plating layer has been damaged.

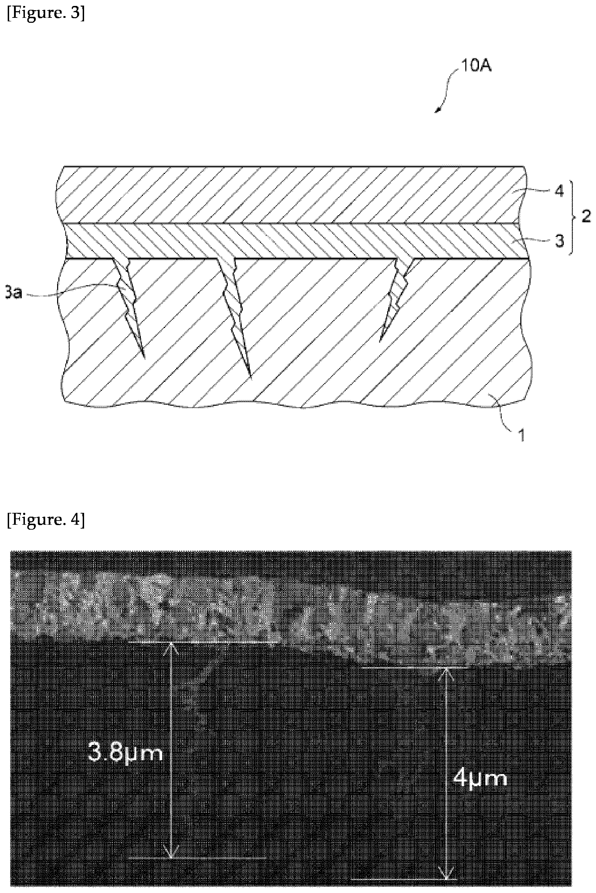

In addition, as shown in Fig. 3, the surface treatment film 2 may be composed of the lowermost metal layer 3 and one or more layers of metal layers 4 (for instance, various functional plating layers) that are formed on the lowermost metal layer 3.

Examples of the one or more layers of metal layers 4 that are formed on the lowermost metal layer 3 include a metal or an alloy which is appropriately selected from among nickel (Ni), a nickel alloy, cobalt (Co), a cobalt alloy, copper (Cu), a copper alloy, tin (Sn), a tin alloy, silver (Ag), a silver alloy, gold (Au), a gold alloy, platinum (Pt), a platinum alloy, rhodium (Rh), a rhodium alloy, ruthenium (Ru), a ruthenium alloy, iridium (Ir), an iridium alloy, palladium (Pd) and a palladium alloy, according to a purpose of imparting desired characteristics. For instance, when two or more layers of metal layers 4 are formed on the lowermost metal layer 3, the lowermost metal layer 3 which is composed of any of nickel, a nickel alloy, cobalt, a cobalt alloy, copper or a copper alloy is formed on the electroconductive substrate 1 that has been subjected to at least a first surface activation treatment step which will be described later; after that, a single layer or the two or more layers of the metal layers 4 are formed which are each composed of metal or an alloy selected from nickel, a nickel alloy, cobalt, a cobalt alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy (which have different compositions from that of lowermost metal layer 3) on the lowermost metal layer 3, as a coating layer for imparting the respective functions required for various components to the surface-treated material 10; and thereby a surface-treated material (plated material) 10 excellent in long-term reliability can be obtained. In particular, it is preferable that the surface treatment film 2 be composed of two or more layers of metal layers 3 and 4 which include at least the lowermost metal layer 3 formed for the purpose of improving the adhesiveness to the electroconductive substrate 1, and the metal layer 4 which acts as a coating layer for imparting the function. As for the surface treatment film 2 composed of the lowermost metal layer 3 and the metal layer 4, for instance, the surface treatment film 2 can be formed by forming a nickel layer on the electroconductive substrate 1 as the lowermost metal layer 3, and then forming a gold plating layer 4 on the lowermost metal layer 3 as the metal layer 4 for imparting the function; and thereby the surface-treated material (plated material) 10 excellent in corrosion resistance can be provided. In addition, the method for forming the metal layers 3 and 4 is not limited in particular, but it is preferable to form the metal layers by the wet plating method.

### (Characteristic constitution of the present invention)

In addition, the characteristic constitution of the present invention exists in optimizing a shape of a portion at which the lowermost metal layer 3 adheres to (contacts) the electroconductive substrate 1. More specifically, the surface-treated material 10 has an electroconductive substrate 1 and a surface treatment film 2 formed of the at least the one or more layers of metal layers formed on the electroconductive substrate 1, and among the at least one or more layers of metal layers, the lowermost metal layer 3 which is a metal layer directly formed on the electroconductive substrate 1 has a plurality of metal-buried portions 3a that are scattered in the electroconductive substrate 1 and continuously extend from the surface of the electroconductive substrate 1 toward the inside thereof. In addition, the surface-treated material 10 has the electroconductive substrate 1 and the surface treatment film 2 formed of the one or more layers of the metal layers which are formed on the electroconductive substrate 1, wherein among the metal layers forming the surface treatment film, the lowermost metal layer 3 in contact with the electroconductive substrate 1 has a plurality of metal-buried portions 3a that extend from the surface of the electroconductive substrate 1 toward the inside in a thickness direction thereof.

By the way, it is general to subject the electroconductive substrate 1, in particular the electroconductive substrate 1 which is, for instance, aluminum or an aluminum alloy that is a base metal having a large ionization tendency, to the zinc substitution treatment, which is so-called zincate treatment, as a conventional method. In the conventional zincate treatment, the thickness of the zinc-containing layer existing between the electroconductive substrate and the surface treatment film (plating film) is, for instance, approximately 100 nm; when the zinc in the zinc-containing layer diffuses in the surface treatment film and further diffuses even to the surface layer of the surface treatment film and appears there, in the case of being used as an electrical contact point, for instance, the surface-treated material causes the problem of resulting in increasing a contact resistance, and further causes various problems such as lowering of wire bondability, lowering of solder wettability and lowering of corrosion resistance; and as a result, there have been cases where the characteristics of the surface treated-material deteriorate due to use, and the long-term reliability is impaired.

Because of this, it is desirable to allow the zinc-containing layer not to exist between the electroconductive substrate 1 and the metal layer 2, but in the conventional film forming technique, unless the zinc-containing layer (in particular, zincate treatment layer) exists, it has been considered difficult to form a surface treatment film (plating film) having adequate adhesiveness to the electroconductive substrate 1, in particular, the electroconductive substrate 1 which is a base metal having a large ionization tendency.

Then, the present inventors have made an extensive investigation, and have found that: by subjecting a surface of the electroconductive substrate 1 (for instance, aluminum base material) to a new surface activation treatment step, prior to the formation of the surface treatment film 2, it is possible to effectively remove the oxide film which stably exists on the surface of the electroconductive substrate 1, even without forming a conventional zinc-containing layer (in particular, zincate treatment layer), and accordingly even though the surface treatment film (for instance, nickel plating layer) is directly formed on the electroconductive substrate 1, metal atoms (for instance, nickel atoms) forming the surface treatment film can directly bond to metal atoms (for instance, aluminum atoms) forming the electroconductive substrate 1; and as a result, it is possible to simply form the lowermost metal layer 3 having the adequate adhesiveness on the electroconductive substrate 1. As a result, the surface-treated material 10 of the present invention can have a surface treatment film having an excellent adhesiveness formed thereon without allowing the zinc-containing layer to exist; accordingly can keep the original characteristics to be obtained after the surface treatment film has been formed, without deterioration even in the use environment at high temperature (for instance, approximately 200°C); and is excellent also in long-term reliability.

In addition, the production method forms the metal-buried portion 3a having a shape in which it infiltrates in the inside direction of the electroconductive substrate 1, in the lowermost metal layer 3; thereby the lowermost metal layer 3 forming the surface treatment film 2 can effectively exhibit the mechanical anchoring effect, so-called "anchor effect", against the electroconductive substrate 1; and as a result, can remarkably improve the adhesiveness of the surface treatment film 2 to the electroconductive substrate 1, in cooperation with an effect that is obtained by effectively removing the oxide film which stably exists on the surface of the above described electroconductive substrate 1. The mechanism according to which such an effect occurs is not certain, but it is assumed that the oxide film existing on the surface of the electroconductive substrate 1 is removed by conducting a new surface activation treatment, which probably creates a state in which the metal-buried portion 3a of the lowermost metal layer 3 easily and preferentially infiltrates toward the inside from the surface of the electroconductive substrate 1, at the boundary portion between a crystal and a crystal, which exists on the surface of the electroconductive substrate 1 and is mainly referred to as a crystal boundary, and that the surface activation treatment can thereby make the above described effect appear. Moreover, the constitution in which the metal-buried portion 3a of the lowermost metal layer 3 infiltrates into the inside of the electroconductive substrate 1 as in the present invention cannot be achieved by a method due to zinc layer substitution and a method of forming fine etching pits on the surface of the base material by etching, which are used as a conventional technique; and the surface-treated material of the present invention having such a constitution shows remarkably excellent adhesiveness, as compared to a surface-treated material having a surface treatment film formed thereon by a conventional method. Furthermore, the method for producing the surface-treated material of the present invention can simply produce the surface-treated material by treatment in a short time period, without conducting a complicated pretreatment step as in the zincate treatment, and accordingly can provide a surface-treated material (plated material) which is greatly improved also from the viewpoint of production efficiency.

The metal-buried portion 3a is a part of the lowermost metal layer 3, is scattered in the electroconductive substrate 1, and continuously extends from the surface of the electroconductive substrate 1 toward the inside thereof.

As for the metal-buried portion 3a, it is preferable for improving the adhesiveness that an average value Lave. of the extension lengths L, as measured from the surface of the electroconductive substrate 1 along the thickness direction, as the vertical cross section of the surface-treated material 10 is viewed, be 0.3 µm or more, and it is more preferable that the average value be in the range of 0.5 µm or more and 10 µm or less. If the average value Lave. of the above described extension lengths L of the metal-buried portions 3a is less than 0.5 µm, there is a case where the metal-buried portion cannot sufficiently exhibit an anchor effect, and the effect of improving the adhesiveness is small; and if the average value of the above described extension length Lave. exceeds 10 µm, there is a case where the metal-buried portion 3a which has infiltrated becomes a starting point when a bending work has been conducted, and cracks tend to easily occur in the surface-treated material 10, in particular, in the electroconductive substrate 1, and there is also a case where the adhesiveness is lowered due to a breakage of the base material. In addition, when it is necessary to satisfy both of the adhesiveness and the bending workability in a well-balanced manner, it is further preferable to control the above described average value Lave. of the extension lengths to a range of 1 µm or more and 5 µm or less.

Here, the extension length L of the metal-buried portion 3a means a length of a straight line which is obtained by measuring a distance from a surface position (surface side root portion) S of the electroconductive substrate 1 to the terminal position F of the metal-buried portion 3a that infiltrates into the inside of the electroconductive substrate 1, along a thickness direction tx of the electroconductive substrate 1, as the vertical cross section of the surface-treated material 10 is viewed.

The extension length L shall be obtained by an operation of forming an arbitrary cross section of the surface-treated material 1 by a cross section forming method, for instance, such as cross section polishing after resin filling, focused ion beam (FIB) processing and further ion milling and a cross section polisher, and measuring the extension length L of the metal-buried portion 3a which exists in the observation region. The average value Lave. of the extension lengths L can be determined by measuring the extension lengths L in all of the metal-buried portions 3a that exist in the observation region having a cross-sectional width W of 50 µm in the electroconductive substrate 1, and calculating an average value from these measured extension lengths L.

In addition, it is preferable that as the vertical cross section of the surface-treated material 10 is viewed, the average existence density P of the metal-buried portions 3a is in the range of 1 piece or more and 10 pieces or less in the observation region in the electroconductive substrate 1, of which the cross-sectional width W is 50 µm. If the average existence density P of the metal-buried portion 3a is less than 1 piece in the observation region, in other words, the metal-buried portion 3a does not exist, there is a case where the anchor effect is exhibited only at a level equivalent to that of the conventional technical product and the effect of improving the adhesiveness is not sufficiently obtained. In addition, if the average existence density P of the metal-buried portion 3a exceeds 10 pieces in the above described observation region, a starting point at which a crack occurs tends to easily occur when a bending work or a pressing work has been conducted, and the surface-treated material, in particular, the electroconductive substrate tends to easily become cracked. Moreover, it is more preferable that the average existence density P of the metal-buried portions 3a be in the range of 3 pieces or more and 5 pieces or less in the above described observation region. Moreover, the observation region for measuring the number of the metal-buried portions 3a when the average existence density P of the metal-buried portion 3a is calculated is similar to the above described observation region for measuring the extension length L of the metal-buried portion 3a.

Moreover, as for the shape of the metal-buried portion 3a in the present invention, it is preferable when the cross section of the electroconductive substrate 1 is two-dimensionally observed to control an extending shape of the metal-buried portion 3a which has infiltrated into the inside mainly along the crystal grain boundary, into a form in which the metal-buried portion is continuously connected as a line segment such as not only a straight shape, a curved shape and a wedge shape, but also a lightning bolt shape (zigzag shape), and it is more preferable particularly to make the metal-buried portion 3a infiltrate into a bond in the interface between the crystal grain and the crystal grain in the crystal grain boundary, in a wedge shape or in a lightning shape as shown in Fig. 2, in the point of making the metal-buried portion 3a create a situation in which it has an anchor effect more strongly. Fig. 4 shows a SIM photograph as one example, at the time when the cross section of the surface-treated material of the present invention has been observed, which has 2 pieces of the metal-buried portions 3a, of which the extension lengths L are each 3.8 µm and 4.0 µm.

### (Method for producing surface-treated material)

Thereafter, several embodiments of the method for producing the surface-treated material according to the present invention will be described below.

In order to produce a surface-treated material having a cross-sectional layer structure, for instance, as is shown in Fig. 1, it is acceptable to subject a plate material, a bar material or a wire material that are each any of base materials of aluminum (for instance, 1000 series of aluminum such as A1100 which is specified in JIS H 4000: 2014, and an aluminum alloy (for instance, 6000(Al-Mg-Si) series alloy such as A6061 which is specified in JIS H 4000: 2014)), sequentially to an electrolytic degreasing step, a surface activation treatment step and a surface treatment film forming step. In addition, it is preferable to further conduct a rinsing step between the above described steps, as needed.

### (Electrolytic degreasing step)

The electrolytic degreasing step includes a method of immersing the base material in an alkaline degreasing bath, for instance, of 20 to 200 g/L sodium hydroxide (NaOH), setting the above described base material as a cathode, and subjecting the base material to cathodic electrolytic degreasing under conditions of a current density of 2.5 to 5.0 A/dm², a bath temperature of 60°C and a treatment time period of 10 to 100 seconds.

### (Surface activation treatment step)

After the electrolytic degreasing step has been conducted, the surface activation treatment step is conducted. The surface activation treatment step is a new activation treatment step which is different from the conventional activation treatment, and is the most important step in the process for producing the surface-treated material of the present invention.

Specifically, it has been considered that it is difficult for the conventional film forming technique to form a surface treatment film (plating film) having adequate adhesiveness particularly on the electroconductive substrate 1 which is a base metal having a high ionization tendency, if a zinc-containing layer (in particular, zincate treatment layer) does not exist, but in the present invention, the oxide film which stably exists on the surface of the electroconductive substrate 1 can be effectively removed by conducting the surface activation treatment step, even if the zinc-containing layer which contains zinc as a main component is not formed by zincate treatment or the like; and in addition, the same metal atom as a metal atom (for instance, nickel atom) that forms the lowermost metal layer 3 which will be directly formed on the electroconductive substrate 1 thereafter is formed on the electroconductive substrate 1 before the lowermost metal layer 3 is formed, as a crystal nucleus or a thin layer, and as a result, even if the lowermost metal layer (for instance, nickel plating layer) 3 is directly formed on the electroconductive substrate 1, metal atoms (for instance, aluminum atoms) forming the electroconductive substrate 1 and metal atoms (for instance, nickel atoms) forming the surface treatment film can directly bond to each other; and as a result, the surface treatment film 2 having the adequate adhesiveness can be simply formed on the electroconductive substrate 1.

In the surface activation treatment step, it is preferable to treat the surface of the electroconductive substrate 1 after having been subjected to the electrolytic degreasing step, by using any one of three activation treatment liquids of: (1) an activation treatment liquid which contains 10 to 500 ml/L of an acid solution of any one selected from among sulfuric acid, nitric acid, hydrochloric acid, hydrofluoric acid and phosphoric acid, and a nickel compound selected from the group consisting of nickel sulfate, nickel nitrate, nickel chloride and nickel sulfamate (0.1 to 500 g/L in terms of metal content of nickel); (2) an activation treatment liquid which contains 10 to 500 ml/L of an acid solution of any one selected from among sulfuric acid, nitric acid, hydrochloric acid, hydrofluoric acid and phosphoric acid, and a cobalt compound selected from the group consisting of cobalt sulfate, cobalt nitrate, cobalt chloride and cobalt sulfamate (0.1 to 500 g/L in terms of metal content of cobalt); and (3) an activation treatment liquid which contains 10 to 500 ml/L of an acid solution of any one selected from among sulfuric acid, nitric acid, hydrochloric acid, hydrofluoric acid and phosphoric acid, and a copper compound selected from the group consisting of copper sulfate, copper nitrate, copper chloride and copper sulfamate (0.1 to 500 g/L in terms of metal content of copper), and at a treatment temperature of 20 to 60°C, at a current density of 0.1 to 20 A/dm², and for a treatment time period of 1 to 200 seconds; and is more preferable to treat at 1 to 100 seconds. The coating thickness of the main component metal (nickel, cobalt, copper and the like) which is precipitated and formed on the surface of the electroconductive substrate 1 in this surface activation treatment step is at most 0.5 µm no matter how thick the coating is.

### (Surface treatment film forming step)

After the surface activation treatment step has been conducted, a surface treatment film forming step is conducted.

In the surface treatment film forming step, it is acceptable to form the surface treatment film 2 only of the lowermost metal layer 3, but it is possible to further form one or more (other) metal layers 4 on the lowermost metal layer 3, and form the surface treatment film 2 of at least two or more layers of metal layers 3 and 4 which include the lowermost metal layer 3, according to the purpose of imparting characteristics (functions) to the surface-treated material 10.

### [Lowermost metal layer forming step]

The lowermost metal layer 3 can be formed with the use of a plating solution that contains the same metal component as the main component metal in the activation treatment solution which has been used in the surface activation treatment step, by a wet plating method of electrolytic plating or electroless plating. Tables 1 to 3 exemplify plating bath compositions and plating conditions at the time when the lowermost metal layer 3 is formed by nickel (Ni) plating, cobalt (Co) plating and copper (Cu) plating, respectively.

**[Table 1]**

| Nickel plating | | | |
|---|---|---|---|
| Plating bath composition | | Bath temperature (°C) | Current density (A/dm²) |
| Component | Concentration (g/L) | | |
| Ni(SO₃NH₂)₂ ■ 4H₂O | 500 | 50 | 10 |
| NiCl₂ | 30 | | |
| H₃BO₃ | 30 | | |

**[Table 2]**

| Cobalt plating | | | |
|---|---|---|---|
| Plating bath composition | | Bath temperature (°C) | Current density (A/dm²) |
| Component | Concentration (g/L) | | |
| Co(SO₃NH)₂ ■ H₂O | 500 | | |
| CoCl₂ | 30 | 50 | 10 |
| H₃BO₃ | 30 | | |

**[Table 3]**

| Copper plating | | | |
|---|---|---|---|
| Plating bath composition | | Bath temperature °C | Current density (A/dm²) |
| Component | Concentration (g/L) | | |
| CuSO₄ ■ 5H₂O | 250 | | |
| H₂SO₄ | 50 | 40 | 6 |
| NaCl | 0.1 | | |

### [Step for forming metal layer other than lowermost metal layer]

When the (other) metal layer 4 is formed which excludes the lowermost metal layer 3 among the metal layers 3 and 4 forming the surface treatment film 2, each of the metal layers 4 can be conducted by a wet plating method of electrolytic plating or electroless plating, according to the purpose of imparting characteristics (functions) to the surface-treated material. Tables 1 to 10 exemplify plating bath compositions and plating conditions at the time when the metal layer is formed by nickel (Ni) plating, cobalt (Co) plating, copper (Cu) plating, tin (Sn) plating, silver (Ag) plating, silver (Ag)-tin (Sn) plating, silver (Ag)-palladium (Pd) plating, gold (Au) plating, palladium (Pd) plating and rhodium (Rh) plating, respectively.

**[Table 4]**

| Tin plating | | | |
|---|---|---|---|
| Plating bath composition | | Bath temperature (°C) | Current density (A/dm²) |
| Component | Concentration (g/L) | | |
| SnSO₄ | 80 | 30 | 2 |
| H₂SO₄ | 80 | | |

**[Table 5]**

| Silver plating | | | |
|---|---|---|---|
| Plating bath composition | | Bath temperature (°C) | Current density (A/dm²) |
| Component | Concentration (g/L) | | |
| AgCN | 50 | | |
| KCN | 100 | 30 | 1 |
| K₂CO₃ | 30 | | |

**[Table 6]**

| Silver-tin alloy plating | | | |
|---|---|---|---|
| Plating bath composition | | Bath temperature (°C) | Current density (A/dm²) |
| Component | Concentration (g/L) | | |
| AgCN | 10 | 40 | 1 |
| K₂Sn(OH)₆ | 80 | | |
| KCN | 100 | | |
| NaOH | 50 | | |

**[Table 7]**

| Silver-palladium alloy plating | | | |
|---|---|---|---|
| Plating bath composition | | Bath temperature (°C) | Current density (A/dm²) |
| Component | Concentration (g/L) | | |
| KAg(CN)₂ | 20 | 40 | 0.5 |
| PdCl₂ | 25 | | |
| K₄O₇P₂ | 60 | | |
| KSCN | 150 | | |

**[Table 8]**

| Gold plating | | | |
|---|---|---|---|
| Plating bath composition | | Bath temperature (°C) | Current density (A/dm²) |
| Component | Concentration (g/L) | | |
| KAu(CN)₂ | 14.6 | | |
| C₆H₈O₇ | 150 | 40 | 1 |
| K₂C₆H₄O₇ | 180 | | |

**[Table 9]**

| Palladium plating | | | |
|---|---|---|---|
| Plating bath composition | | Bath temperature (°C) | Current density (A/dm²) |
| Component | Concentration (g/L) | | |
| Pd(NH₃)₂Cl₂ | 45g/L | 60 | 5 |
| NH₄OH | 90ml/L | | |
| (NH₄)₂SO₄ | 50g/L | | |
| Pallasigma brightener (made by Matsuda Sangyo Co., Ltd.) | 10ml/L | | |

**[Table 10]**

| Rhodium plating | | |
|---|---|---|
| Plating liquid | Bath temperature | Current density |
| RHODEX (trade name, made by Electroplating Engineers of Japan Ltd.) | 50°C | 1.3A/dm² |

The surface treatment film 2 can be formed by changing the layer structure variously by appropriately combining the above described lowermost metal layer 3 with one or more layers of metal layers 4 which are formed on the lowermost metal layer 3, according to the application. For instance, when the surface-treated material of the present invention is used for a lead frame, it is possible after a nickel plating layer has been formed on the electroconductive substrate 1 as the lowermost metal layer 3 to form a metal layer (functional plating layer) composed of one or more types of plating selected from silver plating, silver alloy plating, palladium plating, palladium alloy plating, gold plating and gold alloy plating, on the lowermost metal layer 3, to form the surface treatment film 2, and thereby to impart functions of solder wettability, wire bondability and improvement in reflectance. In addition, when the surface-treated material of the present invention is used for an electrical contact material, it is possible after a copper plating layer has been formed on the electroconductive substrate 1 as the lowermost metal layer 3 to form a metal layer (functional plating layer) composed of silver plating or silver alloy plating to form the surface treatment film 2, and thereby to provide an electric contact material stable in contact resistance. By thus forming the surface treatment film 2 of the two or more layers of metal layers 3 and 4 including the lowermost metal layer 3, it becomes possible to provide an excellent surface-treated material 10 having necessary characteristics according to each of the applications.

The surface-treated material of the present invention can employ a base material such as aluminum and an aluminum alloy which have lighter weight, as a base material (electroconductive substrate), in place of a base material such as iron, an iron alloy, copper and a copper alloy which have been conventionally employed, and can be applied to various components (products) such as a terminal, a connector, a bus bar, a lead frame, a medical member (for instance, guide wire for catheter, stent, artificial joint and the like), a shield case (for instance, for preventing electromagnetic waves), a coil (for instance, for motor), an accessory (for instance, necklace, earring, ring and the like), a contact switch, a cable (for instance, wire harness for aircraft), a heat pipe and a memory disk. This is because the surface-treated material has been formed so as to be capable of withstanding the same use environment as that of a conventional product group formed of iron, the iron alloy, copper and the copper alloy, by making it possible to activate the surface of the base material without making a conventional thick zinc-containing layer (in particular, zincate treatment layer) of approximately 100 nm exist between the base material and the surface treatment film; and the surface-treated material can be used in various products such as wire harness for automotive applications, housing for aerospace applications and an electromagnetic wave shielding case, which are particularly required to reduce the weight.

It is to be noted that the above description merely exemplifies some embodiments of the present invention, and various modifications can be made in the claims.

### Example

Thereafter, a surface-treated material according to the present invention was produced by way of trial, and the performance thereof was evaluated; and accordingly it will be described below.

### (Inventive Examples 1 to 46)

In Inventive Examples 1 to 46, an electrolytic degreasing step was conducted on aluminum-based base materials (size of 0.2 mm × 30 mm × 30 mm) shown in Table 11 and Table 12, under the above described conditions; and then the surface of the electroconductive substrate 1 was subjected to the surface activation treatment. In Inventive Examples 1 to 21 and 24 to 26, the surface activation treatment was conducted with the use of an activation treatment liquid that contained 10 to 500 ml/L of an acid solution of any one selected from among sulfuric acid, nitric acid, hydrochloric acid, hydrofluoric acid and phosphoric acid, and a nickel compound (0.1 to 500 g/L in terms of metal content of nickel) selected from the group consisting of nickel sulfate, nickel nitrate, nickel chloride and nickel sulfamate, under treatment conditions of a treatment temperature of 20 to 60°C, a current density of 0.1 to 20 A/dm² and a treatment time period of 1 to 200 seconds; in addition, in Inventive Example 22, the surface activation treatment was conducted with the use of an activation treatment liquid which contained 300 ml/L of an acid solution of any one selected from among sulfuric acid, nitric acid, hydrochloric acid, hydrofluoric acid and phosphoric acid, and a cobalt compound (50 g/L in terms of metal content of cobalt) selected from the group consisting of cobalt sulfate, cobalt nitrate, cobalt chloride and cobalt sulfamate, under treatment conditions of a treatment temperature of 30°C, a current density of 2 A/dm² and a treatment time period of 20 seconds; and furthermore, in Inventive Examples 23 and 27 to 46, the surface activation treatment was conducted with the use of an activation treatment liquid which contained 10 to 500 ml/L of an acid solution of any one selected from among sulfuric acid, nitric acid, hydrochloric acid, hydrofluoric acid and phosphoric acid, and a copper compound (0.1 to 500 g/L in terms of metal content of copper) selected from the group consisting of copper sulfate, copper nitrate, copper chloride and copper sulfamate, under treatment conditions of a treatment temperature of 20 to 60°C, a current density of 0.1 to 20 A/dm² and a treatment time period of 1 to 200 seconds. After that, the surface treatment film 2 was formed which was formed of the lowermost metal layer 3 and a surface plating layer that was the metal layer 4 formed on the lowermost metal layer 3, by the above described surface treatment film forming step, and the surface-treated material 10 of the present invention was prepared. Table 11 and Table 12 show: the type of the base material (electroconductive substrate 1); the type of the metal compound that is contained in the activation treatment liquid which is used in the surface activation treatment; an average value Lave. of the extension lengths L and the average existence density P of the metal-buried portions 3a; and the types and the thicknesses of the lowermost metal layer 3 and the metal layer 4. In addition, the formation conditions of each of the metal layers 3 and 4 which formed the surface treatment film 2 were conducted under the plating conditions shown in Tables 1 to 10.

### (Comparative Example 1)

In Comparative Example 1, the surface activation treatment was conducted with the use of an activation treatment liquid which contained 200 mL/L of any acid solution selected from sulfuric acid, nitric acid, hydrochloric acid, hydrofluoric acid and phosphoric acid, and a nickel compound (10 g/L in terms of metal content of nickel) selected from the group consisting of nickel sulfate, nickel nitrate, nickel chloride and nickel sulfamate, under conditions of a treatment temperature of 30°C, a current density of 0.05 A/dm² and a treatment time period of 0.5 seconds. In the surface-treated material prepared in Comparative Example 1, the current density was low and the treatment time period was also short; and accordingly the metal-buried portion did not exist in the lowermost metal layer.

### (Conventional Example 1)

In Conventional Example 1, the electrolytic degreasing step was conducted on the aluminum base material (size of 0.2 mm × 30 mm × 30 mm) shown in Table 11 under the above described conditions; and then conventional zinc substitution treatment (zincate treatment) was conducted, and thereby the zinc-containing layer having a thickness of 110 nm was formed. After that, the surface activation treatment was not conducted, and the surface treatment film was formed that was formed of two layers of the metal layers which were formed of the nickel plating layer and the gold plating layer so that the thickness shown in Table 11 was obtained, by the above described surface treatment film forming step; and the surface-treated material was prepared.

**[Table 11]**

| Test material No. | Type of Al-based base material (substrate 1) | Surface activation treatment | Metal-buried portion 3a | | Surface treatment film 2 | | | |
|---|---|---|---|---|---|---|---|---|
| | | Type of metal compound contained in activation treatment solution | Average value Lave. of extension lengths | Average existence density P | Lowermost metal layer 3 | | Coating metal layer 4 | |
| | | | (µm) | (pieces / 50 µm) | Metal species | Thickness (*µ*m) | Metal species | Thickness (*µ*m) |
| Inventive Example 1 | A6061 | Ni | 0.3 | 3 | Ni | 0.5 | Au | 0.1 |
| Inventive Example 2 | A6061 | Ni | 0.6 | 3 | Ni | 0.5 | Au | 0.1 |
| Inventive Example 3 | A6061 | Ni | 1.2 | 3 | Ni | 0.5 | Au | 0.1 |
| Inventive Example 4 | A6061 | Ni | 3.5 | 3 | Ni | 0.5 | Au | 0.1 |
| Inventive Example 5 | A6061 | Ni | 4.8 | 4 | Ni | 0.5 | Au | 0.1 |
| Inventive Example 6 | A6061 | Ni | 5.7 | 4 | Ni | 0.5 | Au | 0.1 |
| Inventive Example 7 | A6061 | Ni | 9.4 | 3 | Ni | 0.5 | Au | 0.1 |
| Inventive Example 8 | A6061 | Ni | 13.0 | 3 | Ni | 0.5 | Au | 0.1 |
| Inventive Example 9 | A6061 | Ni | 3.5 | 1 | Ni | 0.5 | Au | 0.1 |
| Inventive Example 10 | A6061 | Ni | 3.5 | 2 | Ni | 0.5 | Au | 0.1 |
| Inventive Example 11 | A6061 | Ni | 3.5 | 6 | Ni | 0.5 | Au | 0.1 |
| Inventive Example 12 | A6061 | Ni | 3.5 | 10 | Ni | 0.5 | Au | 0.1 |
| Inventive Example 13 | A6061 | Ni | 3.5 | 15 | Ni | 0.5 | Au | 0.1 |
| Inventive Example 14 | A6061 | Ni | 4.8 | 4 | Ni | 0.08 | Au | 0.1 |
| Inventive Example 15 | A6061 | Ni | 4.8 | 4 | Ni | 0.15 | Au | 0.1 |
| Inventive Example 16 | A6061 | Ni | 4.8 | 4 | Ni | 0.8 | Au | 0.1 |
| Inventive Example 17 | A6061 | Ni | 4.8 | 4 | Ni | 1.3 | Au | 0.1 |
| Inventive Example 18 | A6061 | Ni | 4.8 | 4 | Ni | 1.7 | Au | 0.1 |
| Inventive Example 19 | A6061 | Ni | 4.8 | 4 | Ni | 2 | Au | 0.1 |
| Inventive Example 20 | A1100 | Ni | 4.8 | 4 | Ni | 0.5 | Au | 0.1 |
| Inventive Example 21 | A5052 | Ni | 4.8 | 4 | Ni | 0.5 | Au | 0.1 |
| Inventive Example 22 | A6061 | Co | 4.8 | 4 | Co | 0.5 | Au | 0.1 |
| Inventive Example 23 | A6061 | Cu | 4.8 | 4 | Cu | 0.5 | Au | 0.1 |
| Inventive Example 24 | A6061 | Ni | 4.8 | 4 | Ni | 0.5 | Ag | 1.0 |
| Inventive Example 25 | A6061 | Ni | 4.8 | 4 | Ni | 0.5 | Sn | 2.0 |
| Inventive Example 26 | A6061 | Ni | 4.8 | 4 | Ni | 0.5 | Pd | 0.1 |
| Comparative Example 1 | A6061 | Ni | 0 | 0 | Ni | 0.5 | Au | 0.1 |
| Coventional Example 1 | A6061 | Zn zincate treatment | 0 | 0 | Ni | 0.1 | Au | 0.1 |

**[Table 12]**

| Test material No. | Type of Al-based base material (substrate 1) | Surface activation treatment | Metal-buried portion 3a | | Surface treatment film 2 | | | |
|---|---|---|---|---|---|---|---|---|
| | | Type of metallic compound contained in activation treatment solution | Average value Lave. of extension lengths | Average existence density P | Lowermost metal layer 3 | | Coating metal layer 4 | |
| | | | (µm) | (pieces / 50 µm) | Metal species | Thickness (*µ*m) | Metal species | Thickness (*µ*m) |
| Inventive Example 27 | A6061 | Cu | 0.4 | 3 | Cu | 0.5 | Au | 0.1 |
| Inventive Example 28 | A6061 | Cu | 0.6 | 3 | Cu | 0.5 | Au | 0.1 |
| Inventive Example 29 | A6061 | Cu | 4.3 | 3 | Cu | 0.5 | Au | 0.1 |
| Inventive Example 30 | A6061 | Cu | 6.2 | 3 | Cu | 0.5 | Au | 0.1 |
| Inventive Example 31 | A6061 | Cu | 11 | 3 | Cu | 0.5 | Au | 0.1 |
| Inventive Example 32 | A6061 | Cu | 3.7 | 1 | Cu | 0.5 | Au | 0.1 |
| Inventive Example 33 | A6061 | Cu | 3.7 | 3 | Cu | 0.5 | Au | 0.1 |
| Inventive Example 34 | A6061 | Cu | 3.7 | 5 | Cu | 0.5 | Au | 0.1 |
| Inventive Example 35 | A6061 | Cu | 3.7 | 7 | Cu | 0.5 | Au | 0.1 |
| Inventive Example 36 | A6061 | Cu | 3.7 | 11 | Cu | 0.5 | Au | 0.1 |
| Inventive Example 37 | A6061 | Cu | 3.7 | 3 | Cu | 0.07 | Au | 0.1 |
| Inventive Example 38 | A6061 | Cu | 3.7 | 3 | Cu | 0.12 | Au | 0.1 |
| Inventive Example 39 | A6061 | Cu | 3.7 | 4 | Cu | 0.22 | Au | 0.1 |
| Inventive Example 40 | A6061 | Cu | 3.7 | 4 | Cu | 1.2 | Au | 0.1 |
| Inventive Example 41 | A6061 | Cu | 3.7 | 3 | Cu | 1.8 | Au | 0.1 |
| Inventive Example 42 | A1100 | Cu | 3.7 | 3 | Cu | 0.5 | Au | 0.1 |
| Inventive Example 43 | A5052 | Cu | 3.7 | 4 | Cu | 0.5 | Au | 0.1 |
| Inventive Example 44 | A6061 | Cu | 3.7 | 3 | Cu | 0.5 | Ag | 1 |
| Inventive Example 45 | A6061 | Cu | 3.7 | 4 | Cu | 0.5 | Sn | 2 |
| Inventive Example 46 | A6061 | Cu | 3.7 | 3 | Cu | 0.5 | Pd | 0.1 |

### (Evaluation method)

### <Adhesiveness of surface treatment film to base material (electroconductive base material)>

As for the adhesiveness of the surface treatment film to the base material (hereinafter simply referred to as "adhesiveness"), a peeling test was conducted on a test material (surface-treated material) prepared by the above described method, and the adhesiveness was evaluated. The peeling test was conducted according to "15.1 tape test method" of "plating adhesiveness test method" which is specified in JIS H 8504:1999. Table 12 shows the evaluation results of the adhesiveness. The adhesiveness shown in Table 12 was defined as " 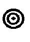 (excellent)" when the peeling of the plating was not observed, as "○ (good)" when 95% or more of the test area adequately adhered, as "Δ (fair)" when 85% or more and less than 95% of the test area adequately adhered, and as "× (poor)" when the adhering area was less than 85% of the test area; and in the present test, a case in which the result corresponded to " 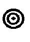 (excellent)", "○ (good)" or "Δ (fair)" was considered to be adhesiveness at an acceptable level.

### <Bending workability>

The bending workability was evaluated by an operation of: conducting a V-bending test on each of the test materials (surface-treated materials) which were prepared by the above described methods, at a bending radius of 0.5 mm in a direction perpendicular to a rolling stripe (rolling direction); and then observing the surface of the top portion thereof with a microscope (VHX 200: made by Keyence Corporation) at an observation magnification of 200 times. The evaluated results are shown in Table 13 and Table 14. The bending workability shown in Table 13 and Table 14 was defined as 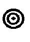 (excellent)" when a crack was not observed at all on the surface of the top portion, as "○ (good)" when not the crack but a wrinkle occurred, as "Δ (fair)" when a slight crack occurred, and as "× (poor)" when a comparatively large crack occurred; and in the present test, a case in which the result corresponded to " 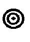 (excellent)", "○ (good)" or "Δ (fair)" was considered to be bending workability at an acceptable level.

### <Measurement of contact resistance>

As for the contact resistance, two types of samples were prepared for every prepared test material (surface-treated material), which were respectively in a state (unheated state) in which the surface treatment film was formed (was plated) and in a state (heat-treated state) after the surface treatment film was subjected to heat treatment at 200°C in the atmosphere for 24 hours, and the contact resistances of the surface-treated material in the unheated state and the surface-treated material after the heat treatment were measured with the use of a 4-terminal method. Under the measurement conditions of Ag probe radius R = 2 mm and a load of 0.1 N, a resistance value when an electric current of 10 mA was passed was measured ten times, and the average value was calculated. Tables 13 and 14 show the evaluation results. Moreover, the contact resistance shown in Table 13 and Table 14 was defined as " 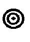 (excellent)" when the contact resistance was 10 mΩ or less, as "○ (good)" when the contact resistance exceeded 10 mΩ and was 50 mΩ or less, as "Δ (fair)" when the contact resistance exceeded 50 mΩ and was 100 mΩ or less, and as "× (poor)" when the contact resistance exceeded 100 mΩ; and in the present test, a case in which the result corresponded to " 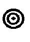 (excellent)", "○ (good)" or "Δ (fair)" was considered to be contact resistance at an acceptable level.

### <Solder wettability>

As for solder wettability, two types of samples were prepared for every prepared test material (surface-treated material), which were in a state (unheated state) in which the surface treatment film was just formed (as plated) and in a state (state after heat treatment) after the surface treatment film was subjected to heat treatment at 200°C in the atmosphere for 24 hours, and solder wetting time periods were evaluated with the use of a solder checker (SAT-5100 (trade name, made by RHESCA, Co. Ltd.)); and the solder wettability was evaluated from the measurement value. Tables 13 and 14 show the evaluation results. Moreover, the solder wettability shown in Table 13 and Table 14 was measured under measurement conditions of which the details are as follows, and was defined as " 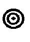 (excellent)" when the solder wetting time period was shorter than 3 seconds, was evaluated as "○ (good)" when the solder wetting time period was 3 seconds or longer and shorter than 5 seconds, was defined as "Δ (fair)" when the solder wetting time period was 5 seconds or longer and shorter than 10 seconds, and was evaluated as "× (poor)" when the surface treatment material was immersed for 10 seconds but was not bonded; and in the present test, the case in which the result corresponded to " 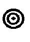 (excellent)", "○ (good)" or "Δ (fair)" was considered to be solder wettability at an acceptable level.
Type of solder: Sn-3Ag-0.5Cu
Temperature: 250°C
Size of test piece: 10 mm × 30 mm
Flux: isopropyl alcohol - 25% rosin
Immersion speed: 25 mm/sec.
Immersion time period: 10 seconds
Immersion depth: 10 mm
As a practical level, a case in which the level was equal to or better than "Δ" was considered to be at an acceptable level.

**[Table 13]**

| Test material No. | Performance evaluation | | | | | |
|---|---|---|---|---|---|---|
| | Adhesiveness | Bending workability | Contact resistance | | Solder wettability | |
| | | | Unheated | After heat treatment (200°C, 24 h) | Unheated | After heat treatment (200°C, 24 h) |
| Inventive Example 1 | Δ | ⊚ | ⊚ | ⊚ | ⊚ | ⊚ |
| Inventive Example 2 | ○ | ⊚ | ⊚ | ⊚ | ⊚ | ⊚ |
| Inventive Example 3 | ⊚ | ⊚ | ⊚ | ⊚ | ⊚ | ⊚ |
| Inventive Example 4 | ⊚ | ⊚ | ⊚ | ⊚ | ⊚ | ⊚ |
| Inventive Example 5 | ⊚ | ⊚ | ⊚ | ⊚ | ⊚ | ⊚ |
| Inventive Example 6 | ○ | ⊚ | ⊚ | ⊚ | ⊚ | ⊚ |
| Inventive Example 7 | ○ | ⊚ | ⊚ | ⊚ | ⊚ | ⊚ |
| Inventive Example 8 | ○ | ○ | ⊚ | ⊚ | ⊚ | ⊚ |
| Inventive Example 9 | ○ | ⊚ | ⊚ | ⊚ | ⊚ | ⊚ |
| Inventive Example 10 | ○ | ⊚ | ⊚ | ⊚ | ⊚ | ⊚ |
| Inventive Example 11 | ⊚ | ○ | ⊚ | ⊚ | ⊚ | ⊚ |
| Inventive Example 12 | ⊚ | ○ | ⊚ | ⊚ | ⊚ | ⊚ |
| Inventive Example 13 | ⊚ | Δ | ⊚ | ⊚ | ⊚ | ⊚ |
| Inventive Example 14 | ⊚ | ⊚ | ⊚ | Δ | ⊚ | Δ |
| Inventive Example 15 | ⊚ | ⊚ | ⊚ | ○ | ⊚ | ○ |
| Inventive Example 16 | ⊚ | ⊚ | ⊚ | ⊚ | ⊚ | ⊚ |
| Inventive Example 17 | ⊚ | ○ | ⊚ | ⊚ | ⊚ | ⊚ |
| Inventive Example 18 | ⊚ | Δ | ⊚ | ⊚ | ⊚ | ⊚ |
| Inventive Example 19 | ⊚ | Δ | ⊚ | ⊚ | ⊚ | ⊚ |
| Inventive Example 20 | ⊚ | ⊚ | ⊚ | ⊚ | ⊚ | ⊚ |
| Inventive Example 21 | ⊚ | ⊚ | ⊚ | ⊚ | ⊚ | ⊚ |
| Inventive Example 22 | ⊚ | ⊚ | ⊚ | ⊚ | ⊚ | ⊚ |
| Inventive Example 23 | ⊚ | ⊚ | ⊚ | ⊚ | ⊚ | ⊚ |
| Inventive Example 24 | ⊚ | ⊚ | ⊚ | ⊚ | ⊚ | ⊚ |
| Inventive Example 25 | ⊚ | ⊚ | ⊚ | ⊚ | ⊚ | ⊚ |
| Inventive Example 26 | ⊚ | ⊚ | ⊚ | ⊚ | ⊚ | ⊚ |
| Comparative Example 1 | × | ⊚ | ⊚ | ⊚ | ⊚ | ⊚ |
| Coventional Example 1 | ○ | ⊚ | ⊚ | × | ⊚ | × |

**[Table 14]**

| Test material No. | Performance evaluation | | | | | |
|---|---|---|---|---|---|---|
| | Adhesiveness | Bending workability | Contact resistance | | Solder wettability | |
| | | | Unheated | After heat treatment (200°C, 24 h) | Unheated | After heat treatment (200°C, 24 h) |
| Inventive Example 27 | ○ | ⊚ | ⊚ | ⊚ | ⊚ | ⊚ |
| Inventive Example 28 | ⊚ | ⊚ | ⊚ | ⊚ | ⊚ | ⊚ |
| Inventive Example 29 | ⊚ | ⊚ | ⊚ | ⊚ | ⊚ | ⊚ |
| Inventive Example 30 | ⊚ | ⊚ | ⊚ | ⊚ | ⊚ | ⊚ |
| Inventive Example 31 | ○ | ○ | ⊚ | ⊚ | ⊚ | ⊚ |
| Inventive Example 32 | ○ | ⊚ | ⊚ | ⊚ | ⊚ | ⊚ |
| Inventive Example 33 | ⊚ | ⊚ | ⊚ | ⊚ | ⊚ | ⊚ |
| Inventive Example 34 | ⊚ | ⊚ | ⊚ | ⊚ | ⊚ | ⊚ |
| Inventive Example 35 | ⊚ | ○ | ⊚ | ⊚ | ⊚ | ⊚ |
| Inventive Example 36 | ⊚ | Δ | ⊚ | ⊚ | ⊚ | ⊚ |
| Inventive Example 37 | ⊚ | ⊚ | ⊚ | Δ | ⊚ | Δ |
| Inventive Example 38 | ⊚ | ⊚ | ⊚ | ○ | ⊚ | ○ |
| Inventive Example 39 | ⊚ | ⊚ | ⊚ | ⊚ | ⊚ | ⊚ |
| Inventive Example 40 | ⊚ | ○ | ⊚ | ⊚ | ⊚ | ⊚ |
| Inventive Example 41 | ⊚ | Δ | ⊚ | ⊚ | ⊚ | ⊚ |
| Inventive Example 42 | ⊚ | ⊚ | ⊚ | ⊚ | ⊚ | ⊚ |
| Inventive Example 43 | ⊚ | ⊚ | ⊚ | ⊚ | ⊚ | ⊚ |
| Inventive Example 44 | ⊚ | ⊚ | ⊚ | ⊚ | ⊚ | ⊚ |
| Inventive Example 45 | ⊚ | ⊚ | ⊚ | ⊚ | ⊚ | ⊚ |
| Inventive Example 46 | ⊚ | ⊚ | ⊚ | ⊚ | ⊚ | ⊚ |

It is understood from the results shown in Table 13 and Table 14 that in any of Inventive Examples 1 to 46, both of the adhesiveness and the bending workability are adequate, and deterioration in contact resistance and solder wettability at 200°C is also inhibited. In particular, it is understood that in Inventive Examples 3 to 7, 16, 20 to 26, 28 to 30, 33 to 34, 39, and 42 to 46, any performance is excellent in good balance.

On the other hand, in Conventional Example 1 in which the surface activation treatment step was not conducted, and besides, a zinc-containing layer as thick as 110 nm was formed by the conventional zincate treatment, the contact resistance and the solder wettability at 200°C were inferior. In addition, in Comparative Example 1 that had no metal-buried portion in the lowermost metal layer, the adhesiveness and the bending workability was not at the acceptable level, and was a defective product.

### Industrial Applicability

According to the present invention, a surface-treated material is provided that has an electroconductive substrate, in particular, an electroconductive substrate which is, for instance, aluminum or an aluminum alloy which is mainly formed of a base metal having a large ionization tendency and is considered to resist having a sound plating film formed thereon, and a surface treatment film that is formed of at least one or more layers of metal layers which are formed on the electroconductive substrate, wherein among the at least one or more layers of metal layers, the lowermost metal layer which is a metal layer directly formed on the electroconductive substrate has a plurality of metal-buried portions that are scattered in the electroconductive substrate, and continuously extend from the surface of the electroconductive substrate toward the inside thereof; and thereby, it becomes possible to provide a surface-treated material that simplifies its process, as compared to a conventional surface-treated material in which a zinc-containing layer (in particular, zincate treatment layer) having a thickness, for instance, of approximately 100 nm is interposed between the substrate and the plating film, and as a result, can be safely produced at an inexpensive cost; in addition, exhibits excellent adhesiveness as a result of the metal-buried portions of the lowermost metal layer infiltrating into the inside of the electroconductive substrate to thereby provide a mechanical anchoring effect, and further can greatly shorten its production time period. As a result, the surface-treated material can keep the original characteristics which are obtained after the surface treatment film has been formed without deteriorating them in use environment, for instance, at high temperature (for instance, approximately 200°C); and it has become possible to provide a surface-treated material having high long-term reliability, and various components (products) which are produced by using the same, such as, for instance, terminals, connectors, bus bars, lead frames, medical members, shield cases, coils, contact switches, cables, heat pipes and memory disks.

### List of Reference Signs

1 Electroconductive substrate (or base material)
2 Surface treatment film
3 Lowermost metal layer
4 Metal layer which forms surface treatment film other than lowermost metal layer
10 and 10A Surface-treated material
F Terminal position
S Surface side root portion

## Claims

1. A surface-treated material comprising an electroconductive substrate and a surface treatment film formed of at least one or more layers of metal layers which are formed on the electroconductive substrate, wherein among the at least one or more layers of metal layers, a lowermost metal layer which is a metal layer directly formed on the electroconductive substrate comprises a plurality of metal-buried portions that are scattered in the electroconductive substrate and continuously extend from a surface of the electroconductive substrate toward an inside thereof.

2. A surface-treated material comprising an electroconductive substrate and a surface treatment film formed of one or more layers of metal layers on the electroconductive substrate, wherein among the metal layers forming the surface treatment film, a lowermost metal layer in contact with the electroconductive substrate comprises a plurality of metal-buried portions that extend from a surface of the electroconductive substrate toward an inside in a thickness direction thereof.

3. The surface-treated material according to claim 1 or 2, wherein an average value of extension lengths of the metal-buried portions is in a range of 0.5 µm or more and 10 µm or less, as measured along a thickness direction from the surface of the electroconductive substrate, as a vertical cross section of the surface-treated material is viewed.

4. The surface-treated material according to any one of claims 1 to 3, wherein an average existence density of the metal-buried portions is in a range of 1 piece or more and 10 pieces or less per cross-sectional width of the electroconductive substrate of 50 µm, as a vertical cross section of the surface-treated material is viewed.

5. The surface-treated material according to any one of claims 1 to 4, wherein the electroconductive substrate is aluminum or an aluminum alloy.

6. The surface-treated material according to any one of claims 1 to 5, wherein the lowermost metal layer is nickel, a nickel alloy, cobalt, a cobalt alloy, copper or a copper alloy.

7. The surface-treated material according to any one of claims 1 to 6, wherein the surface treatment film is formed of the lowermost metal layer and one or more layers of metal layers formed on the lowermost metal layer, and the one or more layers of metal layers are formed of any metal selected from the group consisting of nickel, a nickel alloy, cobalt, a cobalt alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy.

8. The surface-treated material according to claim 7, wherein the one or more layers of metal layers are composed of two or more layers of metal layers.

9. A terminal produced with use of the surface-treated material according to any one of claims 1 to 8.

10. A connector produced with use of the surface-treated material according to any one of claims 1 to 8.

11. A bus bar produced with use of the surface-treated material according to any one of claims 1 to 8.

12. A lead frame produced with use of the surface-treated material according to any one of claims 1 to 8.

13. A medical member produced with use of the surface-treated material according to any one of claims 1 to 8.

14. A shield case produced with use of the surface-treated material according to any one of claims 1 to 8.

15. A coil produced with use of the surface-treated material according to any one of claims 1 to 8.

16. A contact switch produced with use of the surface-treated material according to any one of claims 1 to 8.

17. A cable produced with use of the surface-treated material according to any one of claims 1 to 8.

18. A heat pipe produced with use of the surface-treated material according to any one of claims 1 to 8.

19. A memory disk produced with use of the surface-treated material according to any one of claims 1 to 8.
